# EUROPÄISCHE PATENTSCHRIFT

(11) **EP 2 471 126 B1**
(45) Veröffentlichungstag und Bekanntmachung des Hinweises auf die Patenterteilung: **14.10.2015**
(21) Anmeldenummer: 10743079.5
(22) Anmeldetag: 04.08.2010
(51) Int. Cl.: H01M 2/10, H01M 10/613, H01M 10/625, H01M 10/647, H01M 10/6554, H01M 10/6555, H01M 10/6556, H01M 10/0525

(54) **ENERGIESPEICHERVORRICHTUNG**
ENERGY STORAGE DEVICE
DISPOSITIF ÉLECTROCHIMIQUE D'ACCUMULATION D'ÉNERGIE

(30) Priorität: 24.08.2009 DE 102009038404
(43) Veröffentlichungstag der Anmeldung: 04.07.2012
(73) Patentinhaber: MAHLE Behr GmbH & Co. KG, 70469 Stuttgart (DE)
(72) Erfinder: ISERMEYER, Tobias, 74245 Löwenstein (DE); LORENZ, Roman, 71634 Ludwigsburg (DE); NEFF, Heiko, 71549 Auenwald (DE); LUDWIG, Lars, 73776 Altbach (DE); ZAHN, Christian, 01129 Dresden (DE)
(74) Vertreter: Grauel, Andreas
(86) Internationale Anmeldenummer: PCT/EP2010/061373
(87) Internationale Veröffentlichungsnummer: WO 2011/023515

(56) Entgegenhaltungen:
- EP-A1- 0 159 106
- US-A- 4 367 572
- US-A- 5 283 137
- US-A1- 2005 042 511

## Beschreibung

Die vorliegende Erfindung betrifft eine Energiespeichervorrichtung gemäß dem Oberbegriff des Anspruchs 1. Außerdem ein Verfahren zur Herstellung einer Energiespeichervorrichtung nach Anspruch 4. Vorteilhafte Weiterbildungen der Erfindung sind in den Unteransprüchen beschrieben.

In einer modernen Hochvoltbatterie, insbesondere einer Lithium-lonen-Batterie, sind einzelne Zellen zu einem Zellverbund zusammenzufassen. Die Zelle ist dabei elektrisch, mechanisch und thermisch zu kontaktierten, wobei unter Umständen ein statisch unbestimmtes System entsteht.

Statisch unbestimmt bedeutet, dass für die Kraftflüsse nicht klar definiert ist, ob primär die dedizierte mechanische Anbindung, also die Zellfixierung, belastet wird oder Kraftnebenschlüsse über die mechanisch angebundenen elektrischen Ableiter oder eine gegebenenfalls gesonderte thermische Kontaktierung erfolgen.

Um Fertigungstoleranzen bei dem Aufbau von Zellverbünden auszugleichen, sind technische Lösungen bezüglich der elektrischen Ableiter bekannt. So werden flexible bzw. weiche Zellverbinder zwischen den Zellen verbaut, die einen Toleranzausgleich bei den Zellen erlauben. Bei leistungsschwächeren Batterie-verbünden kann eine Zellkontaktierung beispielsweise durch eine Metallfolie erfolgen, die häufig aus Nickel hergestellt ist. Die Folie gleicht die Toleranzen aus, und die Zellterminals bleiben nahezu kraftfrei.

Im Bereich der thermischen Zellkontaktierung werden Toleranzen bislang nicht ausreichend ausgeglichen, um eine gleichmäßige thermische Kontaktierung zuverlässig darzustellen.

Um das Problem der dauerhaft sicheren Presskräfte zu umgehen, werden u.a. technisch folgende Lösungen umgesetzt: Es werden Zugankervarianten mit Federelementen, z.B. Dehnschrauben, eingesetzt.

Die Druckschriften US 2008 0257624 A1 und die US 2009 0068552 A1 betreffen ein Umspülen oder Eintauchen der Zellen mit oder in ein Kühlfluid, häufig Luft. Die Druckschrift DE 10 2007 009315 A1 offenbart einen Verguss der Zellen nach einem Verbau im Zellverbund, wobei eine Kontaktkühlung erzielt wird.

Die Druckschriften EP 01990861 A1 und WO 2008104374 A1 betreffen ein Zusammenfassen der Funktionen der mechanischen und der thermischen Kontaktierung in unterschiedlichen Gestaltungsformen.

Die Druckschrift DE 195 28 116 B4 offenbart einen Wärmeübertrager mit einer Platten-Sandwichstruktur aus mehreren aufeinander gestapelten Platten. Durch sich überlappende Strömungskanal-Durchbrüche mehrerer aneinandergrenzender Strömungskanalplatten sind Strömungspfade gebildet. Die Sandwichstruktur weist zwei strömungskanalabdeckende Platten auf, zwischen welchen die Strömungskanalplatteneinheit angeordnet ist.

Die im Stand der Technik zur thermischen Zellkontaktierung verwendeten Methoden bringen eine Reihe von Nachteilen mit sich.

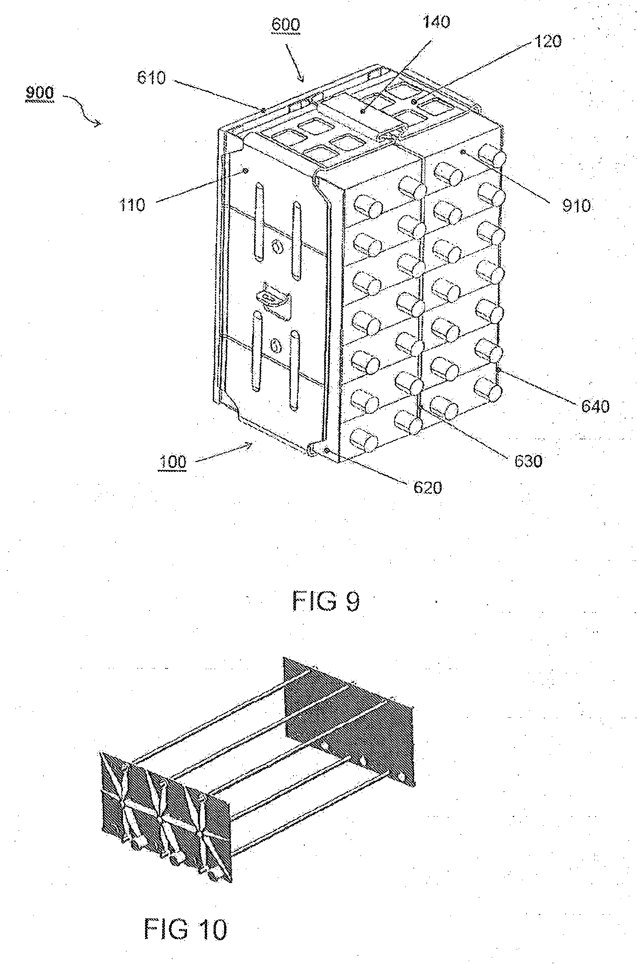

So sind Zugankervarianten zwar in der Lage, einen Zellstapel bzw. einen Verbund aus zu kühlenden Modulen gleichmäßig zu verspannen. Damit sich die Auflager an den Stirnseiten nur mäßig verformen, müssen diese jedoch entsprechend schwer dimensioniert werden. Gegebenenfalls wird durch den Einsatz von Dehnschrauben oder ähnlichem in der Konstruktion ein Nachsetzen ermöglicht, so dass ein dauerhaltbarer, temperaturstabiler Verbund dargestellt werden kann. Fig. 10 zeigt eine perspektivische Darstellung einer Energiespeicherhaltevorrichtung gemäß dem Stand der Technik. Gezeigt ist ein Zuganker, bei dem die Auflager mit Verstrebungen verstärkt sind.

Bezüglich des Umspülens mit Luft ist der Ansatz einer Luftkühlung sehr verbreitet, wobei es aufgrund der niedrigen spezifischen Enthalpie von Luft und den damit verbundenen größeren Volumenströmen zu akustischen Beeinträchtigungen kommen kann und/oder recht große Strömungskanäle vorzuhalten sind.

Es existieren auch Kühlungen mit Trafoölen oder inerten Fluiden, die jedoch vereinzelt Nachteile bezüglich Gewicht, Leistung, Dichtheit, Kosten und ähnlichem haben und sich bislang nicht durchsetzen konnten.

Verguss ist eine weitere Art des Toleranzausgleiches, die z.B. im Zusammenhang mit Hybridmotoren zum Einsatz kommt. Die Zellen bleiben weitestgehend kraftfrei, und dennoch sind sämtliche Luftspalte zwischen Kühler und Zelle verdrängt. Nachteilig bei dem Verguss von Zellen sind die Prozesszeiten bezüglich des Aushärtens der Harze, die Wartung des Zellverbundes und das Recycling.

Es ist die Aufgabe der vorliegenden Erfindung, eine Energiespeichervorrichtung zu schaffen.

Diese Aufgabe wird durch eine Energiespeichereinheit gemäß Anspruch 1, und ein Verfahren gemäß Anspruch 4 gelöst.

Ein besonderer Aspekt der Erfindung ist eine Energiespeichervorrichtung, die einen Kühler mit wärmeleitenden Finnenblechen und eine Spannvorrichtung mit elastischen Elementen, insbesondere Noppen umfasst.

Gemäß dem erfinderischen Ansatz kann eine Kühlung von Batteriezellen, ein Halten von Batteriezellen und/oder eine gleichmäßige Verpressung von Batteriezellen zum Zweck einer gleichmäßigen thermischen Anlage bei akzeptablen thermischen Übergangswiderständen erzielt werden.

Vorteilhafterweise kann gemäß diesem Ansatz eine ausreichend hohe Presskraft für Wärmeübergangswiderstände mit niedriger Sensitivität erzielt werden. Es ist die Konstruktion einer effektiven Halterung für Zellen und gegebenenfalls angebaute Elektronik realisierbar. Weiterhin kann ein Reibschluss erzielt werden, der ausreichend ist für eine automotive Querbeschleunigung, wie sie z.B. im Shakertest eingesetzt wird, da beispielsweise ein Spannelement aus vergleichsweise festem Stahl gefertigt und eingesetzt werden kann, Dabei bleiben die Gesamttoleranzen weiterhin in einem für den Betrieb zulässigen Bereich. Die Wärmeableitung aus den Zellen ist gegeben. Ebenso sind eine Demontage und ein Einzelaustausch möglich. Weiterhin vorteilhaft ist beispielsweise eine zum Kühler hin bündige und bauraumneutrale Finnenblechverlötung Außerdem kann die Anzahl von Stanzwerkzeugen für das Schichtblechdesign reduziert werden, es sind weniger Lötnähte erforderlich, und es kann eine höhere Prozessstabilität erzielt werden.

Die vorliegende Erfindung schafft eine Energiespeichervorrichtung mit einem Halteelement für eine elektrochemische Energiespeichereinheit, wobei das Halteelement folgende Merkmale aufweist: Ein Element, das in zumindest einem Teil eine U-förmige Form mit einer Grundplatte und zwei Schenkeln aufweist, die an sich gegenüberliegenden Kanten der Grundplatte im Wesentlichen senkrecht zur Grundplatte angeordnet sind; und eine Mehrzahl von elastischen Elementen, insbesondere Noppen, die auf einer zu den Schenkeln hin ausgerichteten Oberfläche der Grundplatte angeordnet sind.

Bei der elektrochemischen Energiespeichereinheit handelt es sich beispielsweise um eine Lithium-Ionen-Zelle, wie sie z.B. zum Antrieb von Elektro- oder Hybridfahrzeugen eingesetzt wird. Um ausreichend Energie für den Antrieb des Fahrzeugs bereitstellen zu können, wird meist eine Mehrzahl der elektrochemischen Energiespeichereinheiten zu einem möglichst stabilen Verbund zusammengefasst. Das Halteelement dient dazu, eine oder mehrere elektrochemische Energiespeichereinheiten zumindest teilweise zu umgeben und zu halten. Die Form des Halteelements kann U-förmig sein. Unter einem U-förmigen Bereich kann insbesondere eine Rahmenform verstanden werden, die eine im Wesentlichen ebene Grundplatte aufweist. Die Grundplatte des zumindest teilweise U-förmigen Elements kann eine größere Fläche als die jeweiligen, gleich großen Schenkel des Elements aufweisen. Die elastischen Noppen sind im Allgemeinen aus Kunststoff gefertigt und können einzeln auf die Grundplatte des zumindest teilweise U-förmigen Elements aufgebracht sein oder z.B. mittels einer Trägerfolie aufgeklebt sein. Die elastischen Noppen können als Toleranzausgleich bei der Montage eines Energiespeichermoduls dienen und können, da sie z.B. ganz oder hauptsächlich aus Kunststoff bestehen, als thermische und elektrische Isolierung wirken.

Gemäß einer Ausführungsform können die elastischen Noppen EPDM oder Silikon umfassen. EPDM ist ein Elastomer, das sich neben seiner hohen Elastizität durch gute thermische und chemische Beständigkeit auszeichnet. Es ist daher ausgezeichnet zum Einsatz im Zusammenhang mit galvanischen Zellen im Automobilbereich geeignet.

Ferner kann ein Volumen der elastischen Noppen in einem Mittelbereich der Grundplatte größer sein, als ein Volumen der elastischen Noppen in einem Bereich zu den Schenkeln hin. Vorteilhafterweise kann so ein gleichmäßigerer Toleranzausgleich ermöglicht werden, da durch die größeren Noppen im Mittelbereich der Grundplatte eine höhere Kraft in den Innenbereich des Halteelements ausgeübt werden kann, als in einem Randbereich des Halteelementes. In den Randbereicheh der Grundplatte kann dagegen eine erhöhte Anpresskraft auf in der Halteeinheit angeordneten Energiespeicherelementen durch ein Verbinden des Schenkels des Halteelements mit einem Schenkel eines weiteren Halteelements bewirkt werden.

Gemäß einer weiteren Ausführungsform können die freien Endkanten der Schenkel jeweils voneinander weg nach außen gebogen sein. Auf diese Weise kann sehr einfach eine stabile Möglichkeit eines mechanischen Eingreifens z.B. eines Verbindungselements mit dem Schenkel des Halteelements geschaffen werden. Eine derartige Verformung der Schenkel ist ohne großen zeitlichen und technischen Aufwand zu bewerkstelligen.

Die vorliegende Erfindung schafft ferner eine Energiespeichervorrichtung mit einer Spannvorrichtung zum Halten und Verspannen mindestens einer elektro-chemischen Energiespeichereinheit, wobei die Spannvorrichtung folgende Merkmale aufweist: Ein erstes Halteelement, wie es vorstehend beschrieben wurde und ein zweites Halteelement wie es ebenfalls vorstehend beschrieben wurde, wobei das erste und zweite Halteelement derart zueinander angeordnet sind, dass die umgebogenen freien Endkanten der Schenkel des ersten Halteelements und die umgebogenen freien Endkanten der Schenkel des zweiten Halteelements einander zugewandt sind, und wobei das erste und zweite Halteelement ausgebildet sind, um gemeinsam die mindestens eine elektrochemische Energiespeichereinheit im Wesentlichen zu umgeben. Ferner umfasst die Spannvorrichtung ein erstes Verbinderelement und ein zweites Verbinderelement zum Verbinden des ersten und zweiten Halteelements, derart, dass das erste und zweite Verbinderelement in die nach außen gebogenen Endkanten der Schenkel des ersten und zweiten Halteelements eingreifen, wobei mindestens eines des ersten und zweiten Verbinderelements lösbar in die Endkanten der Schenkel eingreift.

Die Spannvorrichtung kann dabei z.B. die Form eines Rahmens aufweisen, der aus den zwei Halteelementen gebildet ist. Die Spannvorrichtung kann ausgebildet sein, um eine Mehrzahl von elektrochemischen Energiespeichereinheiten mittels Vorspannung so zu halten und zu fixieren, dass ein Herausrutschen der elektrochemischen Energiespeichereinheiten aus der Spannvorrichtung verhindert werden kann. Die Vorspannung kann durch Zusammendrücken der elastischen Noppen beim Einbau der elektrochemischen Energiespeichereinheiten und anschließendes mechanisches Verbinden der einander zugewandten Schenkel der zwei Halteelemente erzielt werden. Die Verbinderelemente können z.B. zwei Spannschlösser sein, die auf die umgebogenen Kanten der jeweils zwei einander zugewandten Schenkel aufgeschoben werden können und zur Lösung der Verbindung auf gleiche Weise entfernt werden können. Eines der beiden in der Spannvorrichtung verwendeten Verbinderelemente kann aber auch eine unlösbare Verbindung zwischen den Schenkeln bilden, z.B. in Form eines Scharniers. Dabei können zum Bestücken der Spannvorrichtung die beiden Halteelemente über das Scharnier auseinandergeklappt werden.

Die vorliegende Erfindung schafft ferner ein Verfahren zum Herstellen einer Energiespeichervorrichtung mit einer Kühlplatte für eine elektrochemische Energiespeichereinheit, wobei das Verfahren folgende Schritte aufweist: Bereitstellen einer Kanalplatte; Ausstanzen von zwei voneinander beabstandeten Öffnungen in der Kanalplatte, wobei durch das Ausstanzen der Öffnungen in der Kanalplatte ein Steg zwischen den Öffnungen gebildet wird, der die beiden Öffnungen voneinander trennt; Verdrücken des Stegs, derart, dass die Kanalplatte im Bereich des Stegs eine geringere Dicke als im restlichen Bereich aufweist; und Verbinden einer Deckplatte mit einer Seite der Kanalplatte zur Bildung einer Kühlplatte, wobei um den verdrückten Steg herum ein von einem Kühlmittel durchströmbarer Kühlkanal ausgebildet wird.

Bei der Kühlplatte kann es sich um eine Metallplatte handeln, die von einem Kühlfluid durchströmt ist und möglichst ummittelbar an einer Energiespeichereinheit angeordnet werden sollte, um möglichst schnell die Wärme aus der Energiespeichereinheit aufzunehmen und abzuführen. Die Kanalplatte kann z.B. eine Schicht der Kühlplatte darstellen, die am Ende des beschriebenen Herstellungsverfahrens einen oder mehrere Kanäle zum Führen des Kühlfluids aufweist. Die Öffnungen können z.B. dieselbe Form aufweisen, dabei aber spiegelbildlich zueinander und durch den Steg getrennt angeordnet sein. So genügt eine einzige Stanzform zum Ausstanzen der Öffnungen. Der Prozess des Ausstanzens kann schnell und ohne großen technischen Aufwand durchgeführt werden. Auch das Verdrücken des Stegs ist in einem einfachen und kurzen Arbeitsschritt möglich. Die Deckplatte kann eine durchgängige Platte mit den gleichen Abmessungen wie die Kanalplatte sein und zur Bildung der Kühlplatte z.B. mit der Kanalplatte verlötet oder verschweißt werden. Mit dem Aufbringen der Deckplatte wird ein Hohlraum zwischen dem verbrückten Steg und der Deckplatte gebildet, der als Kanal zum Führen des Kühlfluids dienen kann.

Dabei können die Kanalplatte und die Deckplatte aus dem gleichen Material, insbesondere Aluminium, gefertigt sein. Eine Verwendung des gleichen Materials ist insofern von Vorteil, als ein stoffschlüssiges Verbinden vereinfacht werden kann, da sowohl die Kanalplatte als auch die Deckplatte in gleicher Weise z.B. auf ein Erwärmen oder ein Lötmittel reagieren. Eine Verwendung von Aluminium oder einer Aluminiumlegierung ist dahingehend vorteilhaft, dass es oder sie leicht zu verarbeiten ist. So kann z.B. zum Verdrücken des Stegs mit weniger Kraftaufwand gearbeitet werden.

Gemäß einer Ausführungsform kann in dem Schritt des Verbindens eine weitere Deckplatte auf einer der Deckplatte gegenüberliegenden Seite der Kanalplatte mit dieser verbunden werden. So kann der durch den verbrückten Steg gebildete Kanal auch auf der anderen Seite der Kanalplatte geschlossen werden. Vorteilhafterweise kann so auf einfache und schnelle Weise eine Kühlplatte mit einem Kanal zum Führen eines Kühlfluids hergestellt werden. Es kann beispielsweise auf ein aufwändiges Ausfräsen eines Kanals verzichtet werden.

Gemäß einer weiteren Ausführungsform kann die weitere Deckplatte Aussparungen aufweisen, die derart angeordnet sind, dass nach dem Verbinden die Öffnungen und der verdrückte Steg in der Kanalplatte auf der Seite der weiteren Deckplatte offen liegen. Dies ermöglicht vorteilhaft die Verwendung der Kanalplatte für eine Vielzahl von Anwendungen im Kühlungsbereich.

Weiterhin vorteilhaft wird ein Verfahren zum Herstellen einer Kühlvorrichtung für eine elektrochemische Energiespeichereinheit geschaffen, wobei das Verfahren die folgenden Schritte aufweist: Bereitstellen einer Kühlplatte mit einem Kanal, der zum Führen eines Kühlfluids ausgebildet ist, wobei der Kanal auf einer Seite der Kühlplatte offen oder frei liegt; Bereitstellen eines Kühlblechs, wobei das Kühlblech eine im Wesentlichen im rechten Winkel umgebogene Kante als ein Fußteil aufweist; Aufsetzen des Kühlblechs auf die Seite der Kühlplatte, auf der der Kanal offen liegt, wobei das Fußteil des Kühlblechs im Wesentlichen parallel zu der Kühlplatte angeordnet ist, derart, dass das Fußteil den Kanal bedeckt; und Verbinden des Fußteils des Kühlblechs mit der Kühlplatte zur Bildung der Kühlvorrichtung.

Bei der Kühlplatte kann es um eine gemäß dem beschriebenen Verfahren hergestellte Kühlplatte mit einer Kanalplatte und einer Deckplatte handeln. Die Kühlplatte kann aber auch durch ein alternatives Verfahren hergestellt sein, beispielsweise durch Ausfräsen eines Kanals auf einer Seite einer Platte. Das Kühlblech kann z.B. aus einem gut Wärme leitenden Metall hergestellt sein und zum Aufnehmen einer elektrochemischen Energiespeichereinheit dienen. Durch das Aufbringen des Fußteils des Kühlblechs kann der Kanal in der Kühlplatte geschlossen und so zum Führen eines Kühlfluids fluiddicht gemacht werden. Unter einem Fluid ist dabei eine Flüssigkeit oder ein Gas zu verstehen. Das Verbinden kann wiederum über ein Verschweißen oder Verlöten erfolgen. Es kann auch eine Mehrzahl von Kühlblechen voneinander beabstandet auf die vorstehend beschriebene Weise auf die Kühlplatte aufgebracht werden.

Somit wird vorteilhaft gemäß dem oben beschriebenen Verfahren eine Kühlvor richtung zum Kühlen mindestens einer elektrochemischen Energiespeichereinheit geschaffen. Eine derartige Kühlvorrichtung weist den Vorteil auf, dass durch die direkte Verbindung des Kühlblechs mit dem Kühlfluid über das Fußteil des Kühlblechs die von den Energiespeichereinheiten abgegebene Wärme schneller von dem Kühlblech an das Kühlfluid abgegeben werden kann. Zudem kann dadurch, dass aufgrund der Konstruktion der Kühlvorrichtung auf den Einsatz einer zweiten Deckplatte verzichtet werden kann, eine erhebliche Gewichtsreduzierung der Kühlvorrichtung erzielt werden.

Die vorliegende Erfindung schafft ferner eine Trägervorrichtung zum Tragen und Kühlen mindestens einer elektrochemischen Energiespeichereinheit, wobei die Trägervorrichtung folgende Merkmale aufweist: Eine Spannvorrichtung gemäß einer vorstehend beschriebenen Ausführungsform; und eine Kühlvorrichtung gemäß einer vorstehend beschriebenen Ausführungsform, Dabei umgibt die Spannvorrichtung die Kühlvorrichtung im Bereich des Kühlblechs, derart, dass die Grundplatte des Halteelements und das Kühlblech im Wesentlichen parallel zueinander ausgerichtet sind.

Die vorliegende Erfindung schafft ferner eine Energiespeichervorrichtung, die folgende Merkmale aufweist: Eine Trägervorrichtung gemäß einer vorstehend beschriebenen Ausführungsform; und mindestens eine elektrochemische Energiespeichereinheit, die benachbart zu dem Kühlblech der Trägervorrichtung angeordnet ist. Dabei ist die Spannvorrichtung der Trägervorrichtung derart um das Kühlblech gespannt, dass die elektrochemische Energiespeichereinheit durch eine Kraft von der Grundplatte auf das Kühlblech und eine Seite der elektrochemischen Energiespeichereinheit in der Trägervorrichtung eingespannt ist.

Beispielsweise kann die Kühlvorrichtung der Trägervorrichtung so aufgebaut sein, dass eine Mehrzahl von Kühlblechen voneinander beabstandet auf der Kühlplatte aufgebracht ist. Dadurch werden fachartige Räume in der Trägervorrichtung geschaffen, die zum Aufnehmen und Kühlen einer Mehrzahl von elektrochemischen Energiespeichereinheiten geeignet sind. Durch den durch die Spannvorrichtung der Trägervorrichtung aufgebauten Druck können dann die elektrochemischen Energiespeichereinheiten zwischen den Kühlblechen fixiert werden, wobei eine Verformung der Kühlbleche zwecks Toleranzausgleich gewollt ist.

Vorteilhafte Ausführungsbeispiele der vorlegenden Erfindung werden nachfolgend Bezug nehmend auf die beiliegenden Zeichnungen näher erläutert. Es zeigen:
- Fig. 1: eine perspektivische Darstellung einer Spannvorrichtung zum Halten und Verspannen einer elektrochemischen Energiespeichereinheit, gemäß einem Ausführungsbeispiel der vorliegenden Erfindung;
- Fig. 2: ein Ablaufdiagramm eines Verfahrens zum Herstellen einer Kühlplatte für eine elektrochemische Energiespeichereinheit, gemäß einem Ausführungsbeispiel der vorliegenden Erfindung;
- Fig. 3: eine Draufsicht auf eine Kanalplatte gemäß einem Ausführungsbeispiel der vorliegenden Erfindung:
- Fig. 4: eine Schnittdarstellung einer Kühlplatte gemäß einem Ausführungsbeispiel der vorliegenden Erfindung mit einer Kanalplatte gemäß einem Ausführungsbeispiel der vorliegenden Erfindung nach Fig. 3;
- Fig. 5: ein Ablaufdiagramm eines Verfahrens zum Herstellen einer Kühlvorrichtung für eine elektrochemische Energiespeichereinheit, gemäß einem Ausführungsbeispiel der vorliegenden Erfindung;
- Fig. 6: eine perspektivische Darstellung einer Kühlvorrichtung gemäß einem Ausführungsbeispiel der vorliegenden Erfindung;
- Fig. 7: eine Schnittdarstellung eines Bereichs einer Kühlvorrichtung gemäß einem Ausführungsbeispiel der vorliegenden Erfindung;
- Fig. 8: eine Schnittdarstellung eines Bereichs einer Kühlvorrichtung gemäß einem weiteren Ausführungsbeispiel der vorliegenden Erfindung;
- Fig. 9: eine perspektivische Darstellung einer Energiespeichervorrichtung, gemäß einem Ausführungsbeispiel der vorliegenden Erfindung; und
- Fig. 10: eine perspektivische Darstellung einer Energiespeicherhaltevorrichtung gemäß dem Stand der Technik.

In der nachfolgenden Beschreibung der bevorzugten Ausführungsbeispiele der vorliegende Erfindung werden für die in den verschiedenen Zeichnungen dargestellten und ähnlich wirkenden Elemente gleiche oder ähnliche Bezugszeichen verwendet, wobei eine wiederholle Beschreibung dieser Elemente weggelassen wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal und einem zweites Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

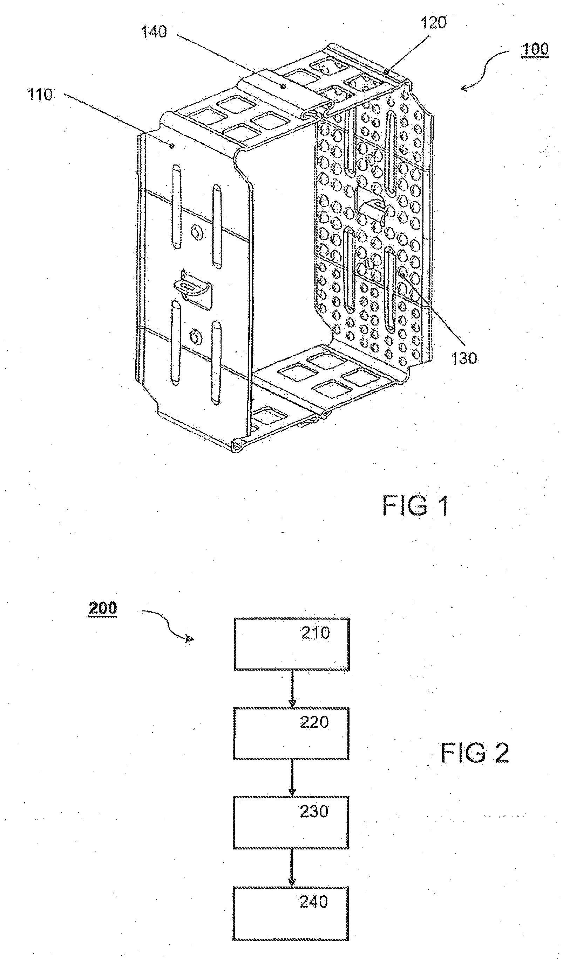

Fig. 1 zeigt ein Ausführungsbeispiel einer erfindungsgemäßen Spannvorrichtung 100 zum Halten und Verspannen einer elektrochemischen Energiespeichereinheit. Die Spannvorrichtung 100 umfasst ein erstes Halteelement 110 und ein zweites Halteelement 120. Die Halteelement 110, 120 können auch als Spannelemente bezeichnet werden. Auf eine Innenseite einer Grundplatte des Halteelements 120 ist eine Noppenstruktur 130 aufgebracht. Ebenso umfasst die Spannvorrichtung 100 ein Verbinderelement 140.

Gemäß der Darstellung in Fig. 1 ist das Verbinderelement 140 als ein Spannschloss ausgeführt, das auf die umgebogenen Kanten von je einem Schenkel des ersten Halteelements 110 und des zweiten Halteelements 120 aufgeschoben ist. Die gegenüberliegenden weiteren Schenkel des ersten Halteelements 110 und des zweiten Halteelements 120 können ebenfalls durch ein Spannschloss 140 mechanisch verbunden sein. Sie können aber auch durch eine andere Form des Verbinderelements 140, z.B. durch ein Scharnier, gekoppelt sein. Die Schenkel des ersten Halteelements 110 und des zweiten Halteelements 120 weisen Öffnungen auf, so dass ein Wärmestau von Wärme der in die Spannvorrichtung 100 einbaubaren elektrochemischen Energiespeichereinheiten (in Fig. 1 nicht gezeigt) vermieden werden kann. Die Noppenstruktur 130 kann aus einem EPDM-Material gebildet sein und weist Noppen auf, die in der Mitte der Grundplatte des Halteelements 120 größer als in den Randbereichen der Grundplatte des Halteelements 120 sind (bezogen auf das Volumen oder eine Höhe der einzelnen Noppen). Die der Oberfläche der Grundplatte des ersten Halteelements 120 gegenüberliegende Oberfläche der Grundplatte des zweiten Halteelements 110 ist ebenfalls mit einer Noppenstruktur 130 ausgekleidet, was aufgrund der perspektivischen Darstellung der Spannvorrichtung 100 in Fig. 1 nicht zu sehen ist.

Gemäß Fig. 1 erfolgt die Verspannung des Kühlers (in Fig. 1 nicht gezeigt) mit den Zellen (in Fig 1 ebenfalls nicht gezeigt) durch die zwei U-förmigen Blechteiie, die Halteelemente 110, 120, die den Kühlkörper (in Fig. 1 nicht gezeigt) umfassen. Die Blechteile 110, 120 werden durch die einfachen, seitlich aufgeschobenen metallischen Spannschlösser 140 miteinander verbunden. Die Vorspannung auf den zu kühlenden Zellverbund (in Fig. 1 nicht gezeigt) ergibt sich aus der Verformung der Blochteile 110, 120 und der Verformung der Kunststoffnoppen 130. Dabei gibt die Geometrie der Noppen den Kraftverlauf im Stauchungsprozess vor. Der Toleranzausgleich erfolgt maßgeblich durch die Noppenstruktur 130, während die Presskraft primär durch das Blech der Halteelemente 110, 120 vorgegeben wird. Würde der Toleranzausgleich über das Blech erfolgen, so würden die Presskräfte sensitiv auf die Fertigungstoleranzen reagieren. Die Noppen 130 werden vorzugsweise direkt auf das Blechteil 110, 120 aufgebracht oder über eine Trägerfolie aufgeklebt.

Fig. 2 zeigt ein Ablaufdiagramm eines Verfahrens 200 zum Herstellen einer Kühlplatte für eine elektrochemische Energiespeichereinheit, gemäß einem Ausführungsbeispiel der vorliegenden Erfindung.

In einem Schritt des Bereitstellen 210 wird eine Kallalplatte bereitgestellt. In einem Schritt des Ausstanzens 220 werden zwei voneinander beabstandete Öffnungen in der Kanalplatte ausgestanzt, wobei durch das Ausstanzen 220 der Öffnungen ein Steg zwischen den Öffnungen gebildet wird und die beiden Öffnungen voneinander trennt. Der Steg wird in einem Schritt des Verdrückens 230 derart zusammengedrückt, dass die Kanalplatte im Bereich des Stegs eine geringere Dicke als im restlichen Bereich aufweist. Schließlich wird in einem Schritt des Verbindens 240 eine Deckplatte mit einer Seite der Kanalplatte zur Bildung einer Kühlplatte verbunden. Dabei wird um den verbrückten Steg herum ein von einen Kühlmittel durchströmbarer Kuhlkanal gebildet.

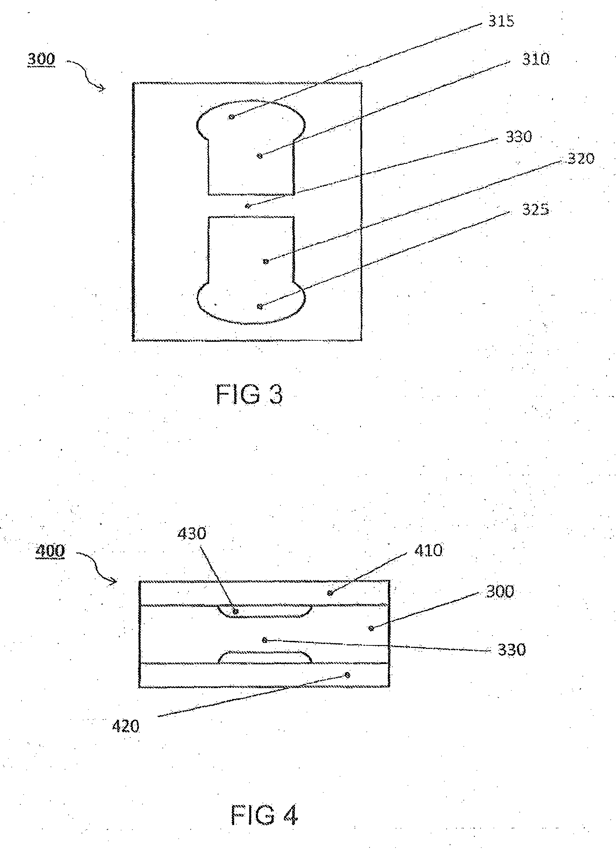

Fig. 3 zeigt eine Draufsicht auf ein Kanalblech bzw. eine Kanalplatte 300 gemäß einem Ausführungsbeispiel der vorliegenden Erfindung.

Gezeigt ist eine erste Öffnung 310 in der Kanalplatte 300 und eine zweite Öffnung 320 in der Kanalplatte 300, die durch Ausstanzen gebildet sind. Die Öffnung 310 weist eine Ausbuchtung auf, die einen Eintritt 315 für ein Kühlfluid bildet. Die Öffnung 320 weist eine identisch geformte Ausbuchtung auf, die einen Austritt 325 für ein Kühlfluid bildet. Die Öffnungen 310 und 320 weisen dieselbe Form auf, sind jedoch spiegelbildlich zueinander beabstandet angeordnet. Ein zwischen den Öffnungen 310, 320 verbleibendes Material der Kanalplatte 300, das die Öffnungen voneinander trennt, bildet einen Stabilisierungssteg 330.

In Fig. 4 ist die erfindungsgemäßen Kanalplatte 300 aus Fig. 3 in einer Schnittdarstellung als ein Element eines Ausfuhrungsbeispiels einer Kühlplatte 400 dargestellt. Gezeigt sind ein erstes Deckblech oder eine erste Deckplatte 410, ein zweites Deckblech oder eine zweite Deckplatte 420, die Kanalplatte 300 mit dem Steg 330 sowie ein Kanal 430.

Die Kanalplatte 300 ist zwischen den Deckplatten 410, 420 sandwichartig angeordnet und mit der ersten Deckplatte 410 und der zweiten Deckplatte 420 stoffschlüssig verbunden. In Fig. 4 ist zu sehen, dass der Stabilisierungssteg 330 der Kanalplatte 300 eine geringere Dicke als ein restlicher Bereich der Kanalplatte 300 aufweist. Infolge der Verbindung der Platten 300, 410, 420 ist durch die beiden Öffnungen der Kanalplatte 300 und die geringere Materialstärke des Stabilisierungssteg 330 ein Kanal 430 gebildet, der um den Stabilisierungssteg 330 herum verläuft. Der Kanal 430 ist ausgebildet, um ein Kühlfluid zu führen.

Somit besteht gemäß Fig. 4 der Kühler bzw. die Kühlplatte 400 aus einem durchströmbaren Schichtblech. Allerdings wird auf einen Aufbau aus mindestens vier Blechen (wie es im Stand der Technik üblich ist), bestehend aus zwei Kanalblechen und zwei Deckblechen, verzichtet. Stattdessen wird der Kanal 430 aus nur einem Blech, dem Kanalblech 300, hergestellt. Die für die Fertigung notwendigen Stege 330, die den Kanal 430 versperren, werden nach dem Stanzen "plattgedrückt".

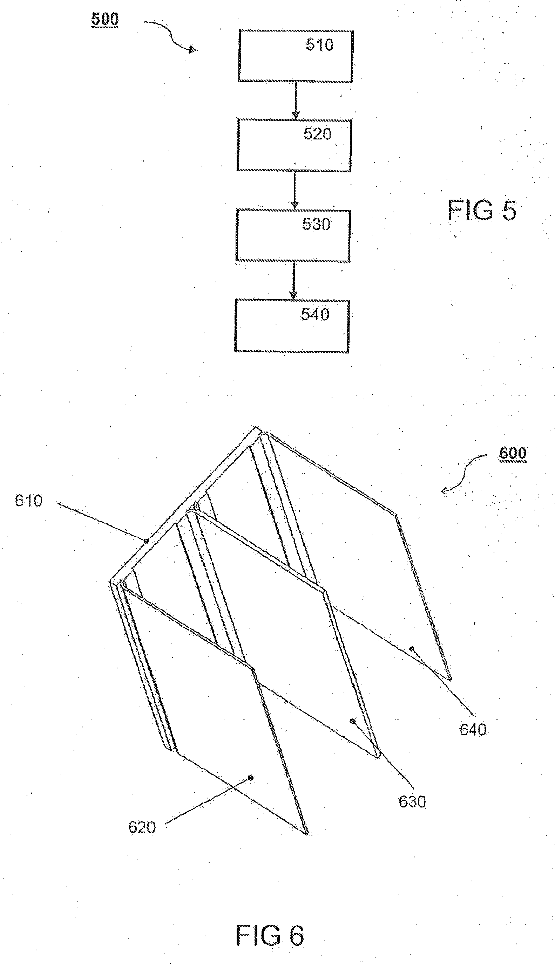

Fig. 5 zeigt ein Ablaufdiagramm eines Verfahrens 500 zum Herstellen einer Kühlvorrichtung für eine elektrochemische Energiespeichereinheit, gemäß einem Ausführungsbeispiel der vorliegenden Erfindung.

In einem Schritt des Bereitstellens 510 einer Kühlplatte wird eine Kühlplatte mit einem Kanal bereitgestellt. Der Kanal liegt auf einer Seite der Kühlplatte offen und ist zum Führen eines Kühlfluids ausgebildet. In einem Schritt eines bereitstellens 520 eines Kühlblechs wird ein Kühlblech bereitgestellt, das eine im Wesentlichen im rechten Winkel umgebogene Kante als ein Fußteil ausweist. In einem Schritt 530 des Aufsetzens wird das Kühlblech auf die Seite der Kühlplatte aufgesetzt, auf der der Kanal offen liegt. Dabei wird das Fußteil des Kühlblechs im Wesentlichen parallel zu der Kühlplatte angeordnet ist, und zwar so, dass das Fußteil den Kanal bedeckt. In einem abschließender Schritt des Verbindens 540 wird das Fußteil des Kühlblechs mit der Kühlplatte verbunden, um die Kühlvorrichtung zu bilden.

Die Schritte 520, 530, 540 des Verfahrens 500 können wiederholt durchgeführt werden, um z.B. eine Kühlvorrichtung herzustellen, die eine Kühlplatte und eine Mehrzahl von Kühlblechen aufweist.

Fig. 6 zeigt schematisch ein Ausführungsbeispiel einer gemäß dem Verfahren 500 der Fig. 5 hergestellten Kühlvorrichtung 600. Die Kühlvorrichtung 600 umfasst eine Kühlplatte 610 gemäß einem Ausführungsbeispiel der vorliegenden Erfindung sowie ein erstes Kühlblech 620, ein zweites Kühlblech 630 und ein drittels Kühlblech 640. Die Kühlbleche 620, 630, 640 können auch als Finnenbleche bezeichnet werden und sind beabstandet voneinander und im rechten Wickel zur der Kühlplatte 610 angeordnet.

Mit der Haltevorrichtung nach Fig. 6 kann eine Zeilanbindung der Energiespeicherzellen über die wärmeleitenden Kühlbleche 620, 630, 640 erfolgen. Die Kühlbleche 620, 630, 640 sind stoffschlüssig mit dem Kühler oder der Kühlplatte 610 verbunden, vorzugsweise durch Löten. Dabei können die Kühlbleche 620, 630, 640 unter Umständen durch Toxen bzw. Durchsetzfügen oder ähnliches vorfixiert sein. Die Kühlbleche 620, 630, 640 können gegebenenfalls Aussparungen zur Reduzierung der Masse und Vergleichmäßigung der Wärmestromdichte aufweisen. Die notwendigen abgewinkelten "Fußbereiche" der Kühlbleche 620, 630, 640 würden zusätzlich Bauraum beanspruchen; daher werden die Deckbleche des Kühlers 610 partiell ausgespart und die abgewinkelten Kühlbleche 620, 630, 640 bündig in diesen Bereichen mit dem Kanalblech verbunden.

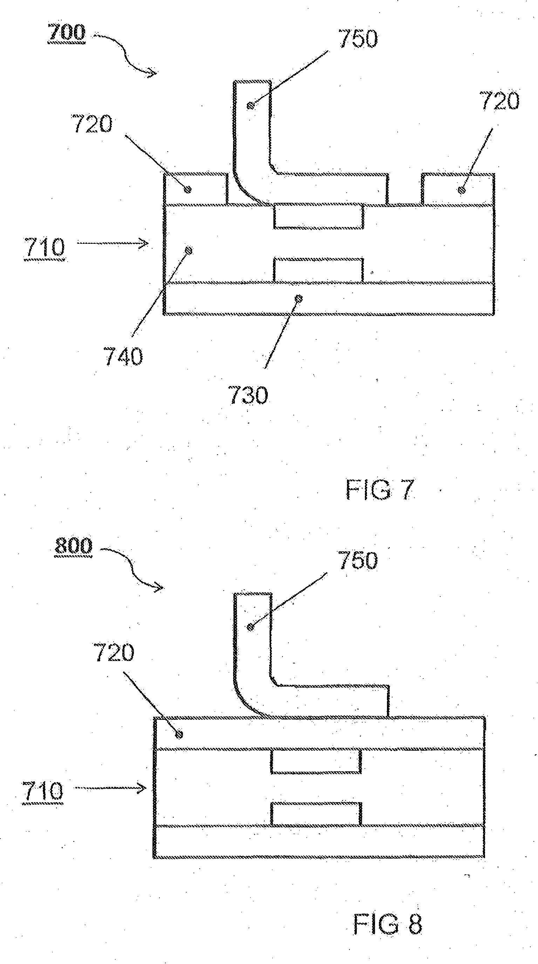

Fig. 7 zeigt eine Schnittdarstellung eines Bereichs einer erfindungsgemäßen Kühlvorrichtung 700 gemäß einem Ausführungsbeispiel der vorliegenden Erfindung. Gezeigt ist ein Ausschnitt einer Kühlplatte 710, die ein oberes 720 und ein unteres 730 Deckblech und ein dazwischenliegendes Kanalblech 740 aufweist, sowie ein Fußbereich eines Finnenblechs 750. Deutlich ist zu sehen, dass das obere Deckblech 720 eine Aussparung aufweist, in die der Fußbereich des Finnenblechs 750 eingesetzt ist. Das Ausführungsbeispiel gemäß Fig. 7 weist somit eine bündige Verbindung des Kühlblechs 750 mit dem Kanalblech 740 der Kühlplatte 710 auf.

Die Darstellung in Fig. 8 zeigt eine alternative Ausführung 800 des Bereichs der erfindungsgemäßen Kühlvorrichtung 700. Hier weist das Deckblech 720 keine Aussparung auf und das Finnenblech 750 weist eine klassische Verbindung mit dem Deckblech 720 der Kühlplatte 710 auf.

Fig. 9 zeigt eine perspektivische Darstellung einer Energiespeichervorrichtung, gemäß einem Ausführungsbeispiel der vorliegenden Erfindung. Gezeigt ist eine Energiespeichervorrichtung bzw. ein Batteriezellverbund 900.

Die Energiespeichervorrichtung 900 setzt sich aus einer Spannvorrichtung 100 gemäß Fig. 1, einem Kühler bzw. einer Kühlvorrichtung 600 gemäß Fig. 6 und Batteriezelle 910 zusammen. Die Spannvorrichtung 100 besteht vorzugsweise aus Stahl und setzt sich aus den zwei Halbschalen bzw. Spannelementen 110, 120 zusammen, die über das oder die Spannschlösser 140 miteinander verbunden sind. Der Kühler 600 besteht aus der durchströmten Grundplatte bzw. Kühlplatte 610 und den drei Kühlblechen 620, 630, 640. Die Kühlplatte 610 setzt sich vorzugsweise aus drei Lagen Aluminium-Blech zusammen. Zwischen den Kühlblechen befinden sich die Batteriezellen 910 oder Module mit Batteriezellen 910, die zu kühlen sind. In Fig. 9 nicht gezeigt ist, dass die Spannvorrichtung 100 auf der Innenseite der Spannelemente 110, 120 Noppen aus vorzugsweise EPDM oder Silikon aufweist sind.

Die beschriebenen Ausführungsbeispiele sind nur beispielhaft gewählt und können miteinander kombiniert werden.

Alternative Fertigungsverfahren zur Herstellung der Kühlvorrichtung umfassen z.b. Guss statt gelöteter Schichtbleche. Auch können für die Spannvorrichtung ein Spannband oder Platten mit Federanker statt der Spannbleche mit Noppen verwendet werden.

## Patentansprüche

1. Energiespeichervorrichtung (900), die folgende Merkmale aufweist:
eine Trägervorrichtung zum Tragen und Kühlen mindestens einer elektrochemischen Energiespeichereinheit (910), wobei die Trägervorrichtung folgende Merkmale aufweist:
eine Spannvorrichtung (100) zum Halten und Verspannen mindestens einer elektrochemischen Energiespeichereinheit (910), wobei die Spannvorrichtung folgende Merkmale aufweist:
ein erstes Halteelement (110), bei welchem die freien Endkanten der Schenkel jeweils voneinander weg nach außen gebogen sind und ein zweites Halteelement (120), bei welchem die freien Endkanten der Schenkel jeweils voneinander weg nach außen gebogen sind und
das erste und das zweite Halteelement folgende Merkmale aufweist: ein zumindest teilweise U-förmiges Element mit einer Grundplatte und zwei Schenkeln, die an sich gegenüberliegenden Kanten der Grundplatte senkrecht zur Grundplatte angeordnet sind; und eine Mehrzahl von elastischen Elementen, insbesondere Noppen (130), die auf einer zu den Schenkeln hin ausgerichteten Oberfläche der Grundplatte angeordnet sind, wobei das erste und zweite Halteelement derart zueinander angeordnet sind, dass die umgebogenen freien Endkanten der Schenkel des ersten Halteelements und die umgebogenen freien Endkanten der Schenkel des zweiten Halteelements einander zugewandt sind, und wobei das erste und zweite Halteelement ausgebildet sind, um gemeinsam die mindestens eine elektrochemische Energiespeichereinheit (910) zu umgeben; und ein erstes Verbinderelement (140) und ein zweites Verbinderelement (140) zum Verbinden des ersten (110) und zweiten (120) Halteelements, derart, dass das erste und zweite Verbinderelement in die nach außen gebogenen Endkanten der Schenkel des ersten und zweiten Halteelements eingreifen, wobei mindestens eines des ersten und zweiten Verbinderelements lösbar in die Endkanten der Schenkel eingreift, und eine Kühlvorrichtung (600; 700) zum Kühlen mindestens einer elektrochemischen Energiespeichereinheit (910), wobei die Spannvorrichtung (100) die Kühlvorrichtung (600; 700) im Bereich des Kühlblechs (520; 620, 630, 640; 750) umgibt, derart, dass die Grundplatte des Halteelements (110, 120) und das Kühlblech parallel zueinander ausgerichtet sind, und mindestens eine elektrochemische Energiespeichereinheit (910), die benachbart zu dem Kühlblech (520; 620, 630, 640; 750) der Trägervorrichtung angeordnet ist; wobei die Spannvorrichtung (100) der Trägervorrichtung derart um das Kühlblech (520; 620, 630, 640; 750) gespannt ist, dass die elektrochemische Energiespeichereinheit (910) durch eine Kraft von der Grundplatte auf das Kühlblech und eine Seite der elektrochemischen Energiespeichereinheit in der Trägervorrichtung eingespannt ist.

2. Energiespeichervorrichtung (110, 120) gemäß Anspruch 1, dadurch gekennzeichnen, dass die elastischen Elemente, insbesondere Noppen, (130) EPDM oder Silikon aufweisen.

3. Energiespeichervorrichtung (110, 120) gemäß einem der Ansprüche 1 oder 2, **dadurch gekennzeichnet, dass** ein Volumen oder eine Höhe der elastischen Elemente, insbesondere Noppen (130), in einem Mittelbereich der Grundplatte größer ist, als ein Volumen oder eine Höhe der elastischen Elemente, insbesondere Noppen, in einem Bereich zu den Schenkeln hin.

4. Verfahren (200) zum Herstellen einer Energiespeichervorrichtung nach einem der vorhergehenden Ansprüche 1 bis 3, mit einer Kühlplatte (400; 610; 710) für eine elektrochemische Energiespeichereinheit (910), wobei das Verfahren folgende Schritte aufweist:
Bereitstellen (210) einer Kanalplatte (300); Ausstanzen (220) von zwei voneinander beabstandeten Öffnungen (310, 320) in der Kanalplatte (300), wobei durch das Ausstanzen der Öffnungen in der Kanalplatte ein Steg (330) zwischen den Öffnungen gebildet wird;
Verdrücken (230) des Stegs (330), derart, dass die Kanalplatte (300) im Bereich des Stegs eine geringere Dicke als im restlichen Bereich aufweist; und
Verbinden (240) einer Deckplatte (410, 420) mit einer Seite der Kanalplatte (300) zur Bildung einer Kühlplatfie (400; 610; 710), wobei um den verdrückten Steg (330) herum ein von einem Kühlmittel durchströmbarer Kühlkanal (430) gebildet wird.

5. Verfahren gemäß Anspruch 4, **dadurch gekennzeichnet, dass** die Kanalplatte (300) und die Deckplatte (410, 420) dasselbe Material, insbesondere Aluminium, aufweisen.

6. Verfahren (200) gemäß Anspruch 4 oder 5, **dadurch gekennzeichnet, dass** in dem Schritt des Verbindens (240) eine weitere Deckplatte (410, 420) auf einer der Deckplatte gegenüberliegenden Seite mit der Kanalplatte (300) verbunden wird.

7. Verfahren (200) gemäß Anspruch 6, **dadurch gekennzeichnet, dass** die weitere Deckplatte (410, 420) Aussparungen aufweist, die derart angeordnet sind, dass nach dem Verbinden die Öffnungen (310, 320) und der verdrückte Steg (330) in der Kanalplatte (300) auf der Seite der weiteren Deckplatte offen liegen.

8. Verfahren (500) zum Herstellen einer Energiespeichervorrichtung mit einer Kühlvorrichtung (600; 700) für eine elektrochemische Energiespeichereinheit (910) nach einem der Ansprüche 4 bis 7, wobei das Verfahren die folgenden Schritte aufweist:
Bereitstellen (510) einer Kühlplatte (400; 610; 710) mit einem Kanal (430), der zum Führen eines Kühlfluids ausgebildet ist, wobei der Kanal auf einer Seite der Kühlplatte frei liegt;
Bereitstellen (520) eines Kühlblechs (520; 620, 630, 640; 750), wobei das Kühlblech eine im rechten Winkel umgebogene Kante als ein Fußteil aufweist;
Aufsetzen (530) des Kühlblechs (520; 620, 630, 640; 750) auf die Seite der Kühlplatte (400; 610; 710), auf der der Kanal (430) frei liegt, wobei das Fußteil des Kühlblechs parallel zu der Kühlplatte angeordnet ist, derart, dass das Fußteil den Kanal bedeckt; und
Verbinden (540) des Fußteils des Kühlblechs (520; 620, 630, 640; 750) mit der Kühlplatte (400; 610; 710) zur Bildung der Kühlvorrichtung (600; 700) mit einem fluiddichten Kühlkanal.

## Claims

1. Energy storage device (900) which has the following features:
a carrier device for carrying and cooling at least one electrochemical energy storage unit (910),
wherein the carrier device has the following features:
a clamping device (100) for holding and bracing at least one electrochemical energy storage unit (910), wherein the clamping device has the following features:
a first holding element (110) in which the free end edges of the limbs are in each case bent outwards away from one another, and a second holding element (120) in which the free end edges of the limbs are in each case bent outwards away from one another, and
the first and the second holding elements have the following features: an at least partially U-shaped element with a baseplate and two limbs which are arranged on opposite edges of the baseplate perpendicularly to the baseplate; and a plurality of elastic elements, in particular pimples (130), which are arranged on a baseplate surface oriented toward the limbs, wherein the first and second holding elements are arranged with respect to each other in such a manner that the bent-over, free end edges of the limbs of the first holding element and the bent-over, free end edges of the limbs of the second holding element face one another, and wherein the first and second holding elements are designed in order jointly to surround the at least one electrochemical energy storage device (910); and a first connector element (140) and a second connector element (140) for connecting the first holding element (110) and second holding element (120) in such a manner that the first and second connector element engage in the outwardly bent end edges of the limbs of the first and second holding elements, wherein at least one of the first and second connector elements engages releasably in the end edges of the limbs, and a cooling device (600; 700) for cooling at least one electrochemical energy storage unit (910), wherein the clamping device (100) surrounds the cooling device (600; 700) in the region of the cooling sheet (520; 620, 630, 640; 750) in such a manner that the baseplate of the holding element (110, 120) and the cooling sheet are oriented parallel to each other, and at least one electrochemical energy storage unit (910) which is arranged adjacent to the cooling sheet (520; 620, 630, 640; 750) of the carrier device; wherein the clamping device (100) of the carrier device is clamped around the cooling sheet (520; 620, 630, 640; 750) in such a manner that the electrochemical energy storage unit (910) is clamped in the carrier device by a force applied by the baseplate to the cooling sheet and to one side of the electrochemical energy storage unit.

2. Energy storage device (110, 120) according to claim 1, **characterized in that** the elastic elements, in particular pimples (130), comprise EPDM or silicone.

3. Energy storage device (110, 120) according to either of claims 1 and 2, **characterized in that** a volume or a height of the elastic elements, in particular pimples (130), is greater in a central region of the baseplate than a volume or a height of the elastic elements, in particular pimples, in a region toward the limbs.

4. Method (200) for producing an energy storage device according to one of the preceding claims 1 to 3, with a cooling plate (400; 610; 710) for an electrochemical energy storage unit (910), wherein the method has the following steps:
providing (210) a duct plate (300);
punching out (220) two spaced-apart openings (310, 320) in the duct plate (300), wherein, by the openings being punched out in the duct plate, a web (330) is formed between the openings;
crushing (230) the web (330) in such a manner that the duct plate (300) has a smaller thickness in the region of the web than in the remaining region; and
connecting (240) a cover plate (410, 420) to one side of the duct plate (300) in order to form a cooling plate (400; 610; 710), wherein a cooling duct (430) through which a coolant can flow is formed around the crushed web (330).

5. Method according to claim 4, **characterized in that** the duct plate (300) and the cover plate (410, 420) comprise the same material, in particular aluminium.

6. Method (200) according to claim 4 or 5, **characterized in that**, in the connecting step (240), a further cover plate (410, 420) is connected to the duct plate (300) on a side opposite the cover plate.

7. Method (200) according to claim 6, **characterized in that** the further cover plate (410, 420) has recesses which are arranged in such a manner that, after the connection, the openings (310, 320) and the crushed web (330) in the duct plate (300) lie open on the side of the further cover plate.

8. Method (500) for producing an energy storage device with a cooling device (600; 700) for an electrochemical energy storage unit (910) according to one of claims 4 to 7, wherein the method has the following steps:
providing (510) a cooling plate (400; 610; 710) with a duct (430) which is designed for conducting a cooling fluid, wherein the duct is open on one side of the cooling plate;
providing (520) a cooling sheet (520; 620, 630, 640; 750), wherein the cooling sheet has an edge bent over at a right angle as a foot part;
placing (530) the cooling sheet (520; 620, 630, 640; 750) onto that side of the cooling plate (400; 610; 710) on which the duct (430) is open, wherein the foot part of the cooling sheet is arranged parallel to the cooling plate in such a manner that the foot part covers the duct; and
connecting (540) the foot part of the cooling sheet (520; 620, 630, 640; 750) to the cooling plate (400; 610; 710) in order to form the cooling device (600; 700) with a fluid-tight cooling duct.

## Revendications

1. Dispositif accumulateur d'énergie (900) qui présente les composants caractéristiques suivants :
un dispositif de support servant à supporter et à refroidir au moins un ensemble accumulateur d'énergie électrochimique (910), où le dispositif de support présente les composants caractéristiques suivants :
un dispositif de serrage (100) servant à maintenir et à serrer au moins un ensemble accumulateur d'énergie électrochimique (910), où le dispositif de serrage présente les composants caractéristiques suivants :
un premier élément de maintien (110) dans lequel les bords d'extrémité libres des branches sont recourbés à chaque fois vers l'extérieur en s'écartant l'un de l'autre, et un second élément de maintien (120) dans lequel les bords d'extrémité libres des branches sont recourbés à chaque fois vers l'extérieur en s'écartant l'un de l'autre, et
le premier et le second éléments de maintien présentent les caractéristiques suivantes : un élément au moins partiellement en forme de U comportant une plaque de base et deux branches qui sont disposées perpendiculairement à la plaque de base, sur des bords de la plaque de base, opposés l'un à l'autre ; et une pluralité d'éléments élastiques, en particulier des tétons (130), qui sont disposés sur une surface de la plaque de base orientée en direction des branches, où le premier et le second éléments de maintien sont disposés l'un par rapport à l'autre de telle manière, que les bords d'extrémité libres, recourbés, des branches du premier élément de maintien et les bords d'extrémité libres, recourbés, des branches du second élément de maintien sont tournés les uns vers les autres, et où le premier et le second éléments de maintien sont configurés pour entourer conjointement l'ensemble accumulateur d'énergie électrochimique (910) au moins au nombre de un ; et un premier élément de liaison (140) et un second élément de liaison (140) servant à relier le premier (110) et le second (120) éléments de maintien de telle manière, que le premier et le second éléments de liaison s'engagent dans les bords d' extrémité - recourbés vers l' extérieur - des branches du premier et du second éléments de maintien, où au moins l'un des premier et second éléments de liaison s'engage de façon détachable dans les bords d'extrémité des branches, et un dispositif de refroidissement (600 ; 700) servant au refroidissement d'au moins un ensemble accumulateur d'énergie électrochimique (910), où le dispositif de serrage (100) entoure le dispositif de refroidissement (600 ; 700) dans la zone de la tôle de refroidissement (520 ; 620, 630, 640 ; 750) de telle manière, que la plaque de base de l'élément de maintien (110, 120) et la tôle de refroidissement sont orientées parallèlement l'une par rapport à l'autre, et au moins un ensemble accumulateur d'énergie électrochimique (910) qui est disposé en étant contigu à la tôle de refroidissement (520 ; 620, 630, 640 ; 750) du dispositif de support ; où le dispositif de serrage (100) du dispositif de support est serré autour de la tôle de refroidissement (520 ; 620, 630, 640 ; 750) de telle manière, que l'ensemble accumulateur d'énergie électrochimique (910) est maintenu par une force exercée par la plaque de base sur la tôle de refroidissement, et un côté de l'ensemble accumulateur d'énergie électrochimique est encastré dans le dispositif de support.

2. Dispositif accumulateur d'énergie (110, 120) selon la revendication 1, **caractérisé en ce que** les éléments élastiques, en particulier les tétons (130), se composent d'élastomères de type EPDM ou bien de silicone.

3. Dispositif accumulateur d'énergie (110, 120) selon l'une des revendications 1 ou 2, **caractérisé en ce qu'**un volume ou une hauteur des éléments élastiques, en particulier des tétons (130), dans une zone centrale de la plaque de base, est supérieur(e) à un volume ou à une hauteur des éléments élastiques, en particulier des tétons, dans une zone en direction des branches.

4. Procédé (200) de fabrication d'un dispositif accumulateur d'énergie selon l'une quelconque des revendications précédentes 1 à 3, comprenant une plaque de refroidissement (400 ; 610 ; 710) pour un ensemble accumulateur d'énergie électrochimique (910), où le procédé présente les étapes suivantes :
la fourniture (210) d'une plaque de conduit (300) ;
la découpe (220), dans la plaque de conduit (300), de deux ouvertures (310, 320) espacées l'une de l'autre, où, par la découpe des ouvertures dans la plaque de conduit, une partie pleine (330) est formée entre les ouvertures ;
la compression (230) de la partie pleine (330), de telle manière que la plaque de conduit (300) présente, dans la zone de la partie pleine, une épaisseur plus faible que celle dans la zone restante ; et
l'assemblage (240) d'une plaque de recouvrement (410, 420) avec un côté de la plaque de conduit (300) pour la formation d'une plaque de refroidissement (400 ; 610 ; 710), où un conduit de refroidissement (430) pouvant être traversé par un liquide de refroidissement est formé tout autour de la partie pleine comprimée (330).

5. Procédé selon la revendication 4, **caractérisé en ce que** la plaque de conduit (300) et la plaque de recouvrement (410, 420) se composent du même matériau, en particulier d'aluminium.

6. Procédé (200) selon la revendication 4 ou 5, **caractérisé en ce que**, au cours de l'étape de l'assemblage (240), une autre plaque de recouvrement (410, 420) est assemblée avec la plaque de conduit (300), sur un côté placé à l'opposé de la plaque de recouvrement.

7. Procédé (200) selon la revendication 6, **caractérisé en ce que** l'autre plaque de recouvrement (410, 420) présente des évidements qui sont disposés de telle manière, que, après l'assemblage, les ouvertures (310, 320) et la partie pleine comprimée (330), dans la plaque de conduit (300), restent ouvertes sur le côté de l'autre plaque de recouvrement.

8. Procédé (500) de fabrication d'un dispositif accumulateur d'énergie comprenant un dispositif de refroidissement (600 ; 700) pour un ensemble accumulateur d'énergie électrochimique (910) selon l'une quelconque des revendications 4 à 7, où le procédé présente les étapes suivantes :
la fourniture (510) d'une plaque de refroidissement (400 ; 610 ; 710) comportant un conduit (430) qui est configuré pour guider un fluide de refroidissement, où le conduit est libre sur un côté de la plaque de refroidissement ;
la fourniture (520) d'une tôle de refroidissement (520 ; 620, 630, 640 ; 750), où la tôle de refroidissement présente un bord recourbé à angle droit comme une partie formant un pied ;
la mise en place (530) de la tôle de refroidissement (520 ; 620, 630, 640 ; 750) sur le côté de la plaque de refroidissement (400 ; 610 ; 710), côté sur lequel le conduit est libre (430), où la partie de la tôle de refroidissement, formant un pied, est disposée parallèlement à la plaque de refroidissement, de telle manière que la partie formant un pied recouvre le conduit ; et
l'assemblage (540) de la partie de la tôle de refroidissement (520 ; 620, 630, 640 ; 750), formant un pied, avec la plaque de refroidissement (400 ; 610 ; 710) pour la formation du dispositif de refroidissement (600 ; 700) comportant un conduit de refroidissement fluidiquement étanche.
